(19) Europäisches Patentamt
European Patent Office
Office européen des brevets

(11) Publication number: **0 431 282 A1**

(12) # EUROPEAN PATENT APPLICATION

(21) Application number: **90119498.5**

(51) Int. Cl.$^5$: **C09K 3/18**

(22) Date of filing: **11.10.90**

(30) Priority: **04.12.89 JP 314890/89**

(43) Date of publication of application:
**12.06.91 Bulletin 91/24**

(84) Designated Contracting States:
**AT CH DE DK FR GB IT LI NL SE**

(71) Applicant: **Nakamuro, Yoshio**
**10-10, Noda 1-chome**
**Kuwana-shi, Mie-ken(JP)**

(72) Inventor: **Nakamuro, Yoshio**
**10-10, Noda 1-chome**
**Kuwana-shi, Mie-ken(JP)**
Inventor: **Mizutani, Akihide**
**656, Aza-tottori, Toin-cho**
**Inabe-gun, Mie-ken(JP)**

(74) Representative: **Türk, Gille, Hrabal**
**Brucknerstrasse 20**
**W-4000 Düsseldorf 13(DE)**

(54) **Method and composition for melting an aqueous solid.**

(57) A method and compositions for melting an aqueous solid such as ice, snow or frost by utilizing the heat generated when an exothermic compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide is dissolved into water or when the exothermic compound in a finely powdered state dispersed in a volatile organic solvent is brought in contact with an aqueous solid.

EP 0 431 282 A1

## METHOD AND COMPOSITION FOR MELTING AN AQUEOUS SOLID

The present invention relates to a method and compositions for melting an aqueous solid, such as ice, snow or frost.

In general, an agent which is sprinkled to the surface of ice, snow or frost to melt it is known as a defrosting or thawing composition or a melting agent for ice, etc.

Typical examples of the conventional melting agent include alcohols, glycols, glycol ethers and mixtures of the foregoing compounds with water. Calcium chloride hexahydrate in the form of granules is also commonly used for melting snow.

The principle of melting an aqueous solid by using the conventional melting agents is to utilize the phenomenon that the resulting mixtures of alcohols, glycols or glycol ethers with water, and the resulting solution of calcium chloride in water have freezing points lower than that of water, i.e. 0 °C, in other words, such mixtures or solution are hard to freeze. Further, in the case of melting agents containing water, the heat which the used water itself retains is utilized to melt an aqueous solid, because water has a greater specific heat.

However, the conventional melting agents have a small melting capacity.

It is an object of the present invention to provide a method and composition for melting an aqueous solid which have a great melting capacity.

Another object of the invention is to provide a method and composition for melting an aqueous solid which are excellent in handling property.

These and other objects of the invention will become apparent from the description hereinafter.

The present invention provides a method for melting an aqueous solid comprising the steps of: dissolving as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide into water, and immediately thereafter, applying the resulting solution to an aqueous solid;

a composition for melting an aqueous solid comprising (A) at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide as an effective ingredient, and (B) water, said components (A) and (B) being contained in separate closed containers, respectively, or in a container so that the components (A) and (B) are separated from each other; and

a composition for melting an aqueous solid comprising as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide, dissolved in water, wherein said composition retains substantially the heat generated on the dissolution and has a temperature not lower than 0.1 °C (hereinafter referred to as "the first invention").

The present invention further provides a composition for melting an aqueous solid comprising as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide, dispersed in the form of particles having a size of 0.1 to 500 $\mu$m in a volatile organic solvent (hereinafter referred to as "the second invention").

Fig. 1 is a graph showing a relationship between the amount of exothermic compounds used in the present invention added to water and the temperature rise of the water.

Figs. 2A and 2B illustrate an example of the two-component type melting composition in accordance with the present invention, Figs. 2A and 2B being a cross-sectional view and a top plan view, respectively, showing a conainer wherein the exothermic compound and the water component are separately contained.

Figs. 3A and 3B and Fig. 4 illustrate another example of the two-component type melting composition in accordance with the present invention, Figs. 3A and 3B being a cross-sectional view and a top plan view, respectively, showing a container containing the water component, and Fig. 4 being a partially broken perspective view showing a bag containing the exothermic compound.

Figs. 5A and 5B are a cross-sectional view and a top plan view, respectively, showing another example of the container containing the exothermic compound which can be used in combination with the container containing the water component as shown in Figs. 3A and 3B.

In the present invention, the term "aqueous solid" is intended to include all frozen water or water vapour, such as ice, snow and frost, which may contain impurities such as inorganic salts.

In accordance with the first invention, an aqueous solid such as ice is melted by utilizing the phenomenon that the effective ingredient generates heat on dissolving into water, thereby elevating the temperature of the water. For instance, when a small amount of the effective ingredient is added to water of 0° C to obtain water (aqueous solution) of 0.1° C, it is possible to melt ice by using a large amount of the obtained aqueous solution of 0.1° C. Ice of 0° C cannot be melted with water of 0° C.

In accordance with the second invention, an aqueous solid such as ice is melted by utilizing the phenomenon that when a dispersion of the powdered effective ingredient in a volatile organic solvent is applied to ice, a large portion of the organic solvent is volatilized and the powder of the effective ingredient is brought into direct contact with the ice even if a small portion of the organic solvent remains, thereby generating heat so that an amount of ice proportional to the amount of the effective ingredient is melted into water.

The effective ingredient used in the present invention is a compound selected from the following group: anhydrous calcium chloride ($CaCl_2$), calcium chloride monohydrate ($CaCl_2 \cdot H_2O$), calcium chloride dihydrate ($CaCl_2 \cdot 2H_2O$), calcium bromide dihydrate ($CaBr_2 \cdot 2H_2O$), anhydrous magnesium chloride ($MgCl_2$), anhydrous strontium chloride ($SrCl_2$), anhydrous lithium chloride ($LiCl$), lithium chloride monohydrate ($LiCl \cdot H_2O$) and anhydrous lithium bromide ($LiBr$).

These compounds may be used alone or in admixture.

The above compounds are those which are solid at ordinary temperature and which have the property that they generate heat when they are dissolved in water or brought into contact with water or aqueous solids such as ice. All the compounds generate a large quantity of heat.

Calcium chloride hexahydrate ($CaCl_2 \cdot 6H_2O$), which has been commonly used as a melting agent for snow and ice, cannot be used in the present invention, because its dissolution in water is endothermic and the temperature of the water is lowered.

For the purpose of evaluating the exothermic property of the above solid compounds, various amounts of each compound was dissolved into 100 g of water having a temperature of about 16° to 17° C and a relationship between the amount of the compound added (dissolved) and the rise in the temperature of water (solution) was determined. The results are shown in Fig. 1. As is clear from the graph of Fig. 1, anhydrous magnesium chloride, anhydrous lithium chloride and anhydrous calcium chloride generate especially larger quantities of heat and are more effective.

In accordance with the first invention, the effective ingredient can be used in the range of from 0.03 part by weight per 100 parts by weight of water to such amount that water is saturated with the effective ingredient, thereby obtaining an aqueous solution having a temperature of 0.1° to 100° C.

The temperature of the obtained aqueous solution is preferably not less than 10° C from the standpoint of melting capacity. The upper limit of the temperature is not limited but is preferably 70° C for practical use.

From the standpoint of handling property, the amount of the effective ingredient is preferably from 0.03 to 150 parts by weight, more preferably from 3 to 35 parts by weight, per 100 parts by weight of water. From the standpoint of melting capacity, the effective ingredient is preferably used in such an amount that the temperature of the water used is raised by at least 0.1° C, especially by at least 10° C.

An aqueous solution of each solid compound as an effective ingredient has a pH value around neutrality and low dangerousness and toxicity.

In the first invention, the amount of heat generated when the effective ingredient is dissolved into water increases with an increasing amount of the effective ingredient. In some case, the use of a kind of the effective ingredient causes boiling of water. For example, when 350 g of anhydrous calcium chloride is dissolved into 1 ℓ of water of 15° C, the temperature of the water is raised till it boils.

Usually natural water or city water is used as water for dissolving the effective ingredient. Purified water such as distilled water or ion-exchanged water may be used.

Anhydrous magnesium chloride, anhydrous lithium chloride and anhydrous calcium chloride are preferably used as the effective ingredient from the viewpoint that they generate a large amount of heat upon dissolving in water.

In accordance with the first invention, an aqueous solution obtained by dissolving the effective ingredient into water is used immediately after the preparation thereof, i.e. in such a state that the solution retains substantially the amount of heat generated.

In a preferred practical embodiment, the melting composition of the first invention is used in the form of a separate two-component type melting agent. That is, there are provided a closed container or bag containing a desired amount of the effective ingredient (exothermic compound) and another closed container or bag containing a desired amount of water. Both containers or bags are opened in situ in a place where melting of ice, etc. is conducted and the effective ingredient is dissolved into the water to give an aqueous solution which is immediately used to melt an aqueous solid. Examples of the container or bag include those made of plastic films or sheets and metal cans. The effective ingredient and water may be contained in single container or bag unless they mix. A container or bag wherein the inside is separated into two rooms by a separator can be used. The effective ingredient is contained in one room and water in the other room and both components are mixed with each other by removing the separator or by breaking it.

In the case that the above separate two-component type melting agent is used under such a condition that water freezes, it is preferable to add a conventional antifreezing agent to water. Examples of the antifreezing agent are alcohols such as isopropyl alcohol, glycols such as ethylene glycol and propylene glycol, and glycol ethers such as ethylene glycol monobutyl ether. These antifreezing agents may be used alone or in admixture. The amount of the antifreezing agent varies depending upon the temperature of the circumstance where the melting agent is used. Generally, the antifreezing agent is used in an amount of 30 to 200 parts by weight per 100 parts by weight of water to lower the freezing point of the water component to a range of -5 °C to -40 °C.

The separate two-component type melting composition will be explained by referring to the drawings.

Figs. 2A and 2B illustrate an example of the separate two-component type melting composition in accordance with the present invention. Figs. 2A and 2B are a cross-sectional view and a top plan view, respectively, showing a container containing the exothermic compound and the water component separate from each other. Numeral 10 indicates a cylindrical container made of a metal such as aluminum. The container 10 has, between its top and bottom, a sheet-like separator 11 made of a material impervious to water vapor and water, such as plastic material, for separating the exothermic compound 1 and the water component 2. The water component 2 is put in the container 10 and the separator 11 is bonded at its periphery to the inner wall of the container 10. The exothermic compound 1 in a powdery or granular form is put on the separator 11. The top of the container 10 is closed airtightly with a sheet-like covering 12 made of a material impervious to water vapor and water, such as plastic material. A lid 13 is further put on the top of the container 10. The lid 13 is equipped with a cutting device 14 having a length enough for its tip to reach the separator 11. The cutting device 14 is attached to the lid 13 with extending downward along the outer surface of the side wall of the container 10. Another covering 15 made of a resilient material such as plastic material and capable of closing liquid-tightly the top of the container 10 is attached detachably to the bottom of the container 10.

The manner of using the above-mentioned two-component type melting composition is as follows: The lid 13 and the resilient covering 15 are detached from the container 10. The cutting device 14 is moved to the cutting position 17 through a slot 16 in the direction indicated by the arrow. The lid 13 with the cutting device 14 located in that position is again put on the container 10 and pushed down so that the cutting device 14 pierces through the covering 12 and the separator 11. Then the lid 13 is turned fully clockwise or anticlockwise so that the covering 12 and the separator 11 are cut off and the exothermic component 1 falls into the water component 2. The lid 13 is removed and the top of the container 10 is closed with the covering 15. The thus closed container is shaken for an appropriate time, for example, 30 to 60 seconds, thereby giving a hot water which is used to melt a solid water.

Figs. 3A and 3B and Fig. 4 illustrate another example of the two-component type melting composition. Figs. 3A and 3B are a cross-sectional view and a top plan view, respectively, showing a container containing the water component and Fig. 4 is a partially broken perspective view showing a bag containing the exothermic compound 1. Numeral 20 indicates a container containing the water component. The container 20 is made of a metal such as aluminum and has a structure similar to a pull-top can. That is, the container 20 has a lid 21 provided with a pull ring 22 and a notched loop 23. When the pull ring 22 is pulled up, the lid 21 is cut at the notched loop 23 and the central portion of the lid 21 can be removed. The water component 2 is put in the container 20 and the container 20 is liquid-tightly sealed by crimping the lid 21. A covering 24 made of a resilient material such as plastic material and capable of closing liquid-tightly the top of the container 20 is attached detachably to the bottom of the container 20. The exothermic compound 2 is contained in a bag 30 made of a material impervious to water vapor and water, such as plastic material. The bag 30 is airtightly closed by a suitable means such as heat sealing.

The manner of using the two-component type melting composition is as follows: The lid 21 is removed from the container 20. The bag 30 is opened and the exothermic compound 1 is added to the water component 2 in the container 20. The top of the container 20 is closed with the covering 24 and the container 20 is shaken for an appropriate time to dissolve the exothermic compound 1 into the water component 2, thereby giving a hot water.

Figs. 5A and 5B show another example of the container containing the exothermic compound which can be used in combination with the container containing the water component as shown in Figs. 3A and 3B. Figs. 5A and 5B are a cross-sectional view and a top plan view, respectively, of the container. Numeral 40 indicates a container containing the exothermic compound 1. The container 40 has a structure similar to the container 20. In Figs. 5A and 5B, the same numerals as those in Figs. 3A and 3B indicate the same elements.

In accordance with the second invention, there is used a dispersion of the effective ingredient in the form of fine particles having a size of from 0.1 to 500 µm, preferably from 5 to 100 µm, in a volatile organic solvent, for the purposes of increasing the contacting surface between the effective ingredient and an aqueous solid and of obtaining a melting agent having a good spraying property.

All the effective ingredients have a marked deliquescence and it is difficult to pulverize the effective ingredient especially into fine particles in air because it absorbs moisture in air.

Therefore it is convenient to pulverize the effective ingredient in a volatile organic solvent free from water, yielding a dispersion of a finely powdered effective ingredient in the solvent, because the pulverizing can be conducted in the absence of moisture. A ball mill is preferably used to disperse the effective ingredient into the organic solvent.

In the case of using anhydrous salts, especially anhydrous calcium chloride, anhydrous magnesium chloride or anhydrous lithium chloride as the effective ingredient, the second invention is more effective because they are markedly deliquescent.

In the second invention, the effective ingredient is usually used in an amount of 30 to 140 parts by weight per 100 parts by weight of the organic solvent.

Organic solvents having a fast vaporizing rate are preferably used as the volatile organic solvent, including methanol, ethanol, benzene, toluene, petroleum benzine, petroleum ether, methyl acetate, ethyl acetate, acetone, methyl ethyl ketone, isopropyl ether and methylene chloride. Organic solvents having a medium vaporizing rate can be used, including isopropyl alcohol, butanol, xylene, butyl acetate, methyl isobutyl ketone, cyclohexane, ligroin and trichloroethane. However, the melting rate becomes somewhat slow. Organic solvents having a very slow vaporizing rate, such as kerosene, can also be used though the melting rate becomes slow.

The composition of the second invention can be used in an aerosol product.

An aerosol composition composed of a dispersion of an effective ingredient in a volatile organic solvent in accordance with the second invention and an appropriate propellant is packaged in an aerosol container with a valve and an actuating nozzle button. Examples of the propellant are dimethyl ether, nitrogen gas, carbon dioxide, liquefied petroleum gas and flon gases. Usually the amount of the proppelant is from 20 to 300 parts by weight per 100 parts by weight of the dispersion. In the second invention, the aerosol product is preferred because of a good handling property and a good applying property.

The compounds used as an effective ingredient in the first and second invention are chlorides or bromides. The compounds cause chlorine ion or bromine ion when they are dissolved in water. These anions accelerate corrosion of iron. In case of melting an aqueous solid in places where iron materials are used, a composition in accordance with the first invention or the second invention is preferably used in combination with a corrosion inhibitor. Examples of the corrosion inhibitor are potassium nitrite ($KNO_2$) and sodium nitrite ($NaNO_2$) .

The melting compositions of the first invention and the second invention can be applied to an aqueous solid such as ice, snow or frost by any application means including spraying with a spray device or an aerosol product, brush coating and roller coating.

The melting compositions of the first invention and the second invention are preferably used to melt frost or ice formed on window panes or mirrors of vehicles (automobiles, electric cars, etc.), houses, buildings, etc. and to melt a small amount of snow or ice on small area of places such as gateway of houses, etc. The melting compositions can also be used to melt frost or ice formed on the cooling coil of refrigerators and the fins of heat pump of cooling or heating apparatuses. Such frost and ice should be removed when these apparatuses get out of order. Of course, the melting compositions of the invention can be used to melt ice, snow or frost on any places or apparatuses.

Both melting composition of the first invention and the second invention have a great melting capacity because of utilizing the heat generated when the exothermic solid compound is dissolved into water or brought in contact with an aqueous solid such as ice, snow or frost.

Further, both melting compositions of the first invention and the second invention are easy to be applied onto an aqueous solid because they are liquid, and they are easy to be handled with safety because they are nutral.

In general, when ice is melted by using water having a temperature of not lower than 0.1 °C under the conditions that the atmospheric temperature is lower than 0 °C, e.g. -1 °C, the melted ice is again frozen.

However, when ice is melted by using the melting composition of the first invention or the second invention, the dissolved effective ingredient causes freezing point lowering and therefore the melted ice is not frozen unless the atmospheric temperature is very low. The present invention is more specifically described and explained by means of the following Examples. It is to be understood that the present invention is not limited to the Examples, and various change and modifications may be made in the invention without departing from the spirit and scope thereof.

Example 1

Melting compositions A through P having the formulations shown in Table 1 in accordance with the first invention were prepared. Each melting composition was prepared by adding a given amount of an exothermic solid compound to 100 g of city water and agitating the mixture for 30 seconds to dissolve the compound into the water.

The temperatures (maximum temperature) of the obtained melting compositions A through P were measured. As shown in Table 2, rises in temperature ranging from 1.5° to 16.5° C were observed.

Thus, the melting compositions A through P were liquids having temperatures higher than that of the original water (of course, that of ice). Accordingly, when each of the compositions A through P was applied to ice, the ice was melted efficiently. In practical use, the amount of each melting agent to be used is determined in consideration of a given amount of ice. For instance, in the case of using 105 g of the melting composition H (the rise in temperature: 15.5° C), about 19 g of ice could be melted by utilizing only the heat generated.

Table 1

| | Melting composition No. | | | | | | | | | | | | | | | |
|---|---|---|---|---|---|---|---|---|---|---|---|---|---|---|---|---|
| | A | B | C | D | E | F | G | H | I | J | K | L | M | N | O | P |
| Water | 100 | 100 | 100 | 100 | 100 | 100 | 100 | 100 | 100 | 100 | 100 | 100 | 100 | 100 | 100 | 100 |
| $CaCl_2$ | 1 | 5 | – | – | – | – | – | – | – | – | – | – | – | – | – | – |
| $CaCl_2 \cdot 2H_2O$ | – | – | 4 | 20 | – | – | – | – | – | – | – | – | – | – | – | – |
| $CaBr_2 \cdot 2H_2O$ | – | – | – | – | 4 | 20 | – | – | – | – | – | – | – | – | – | – |
| $MgCl_2$ | – | – | – | – | – | – | 1 | 5 | – | – | – | – | – | – | – | – |
| $SrCl_2$ | – | – | – | – | – | – | – | – | 4 | 20 | – | – | – | – | – | – |
| LiCl | – | – | – | – | – | – | – | – | – | – | 1 | 5 | – | – | – | – |
| $LiCl \cdot H_2O$ | – | – | – | – | – | – | – | – | – | – | – | – | 4 | 20 | – | – |
| LiBr | – | – | – | – | – | – | – | – | – | – | – | – | – | – | 4 | 20 |
| Total | 101 | 105 | 104 | 120 | 104 | 120 | 101 | 105 | 104 | 120 | 101 | 105 | 104 | 120 | 104 | 120 |

* Figures in Table 1 mean the amounts of the components in terms of gram.

Table 2

| | Melting composition No. | | | | | | | | | | | | | | | |
|---|---|---|---|---|---|---|---|---|---|---|---|---|---|---|---|---|
| | A | B | C | D | E | F | G | H | I | J | K | L | M | N | O | P |
| Temp. of water (°C) | 16.5 | 16.5 | 15.5 | 17.0 | 17.0 | 17.0 | 17.0 | 16.5 | 16.0 | 17.0 | 16.0 | 16.0 | 16.5 | 17.0 | 16.5 | 16.5 |
| Temp. of solution (°C) | 18.0 | 23.5 | 17.8 | 27.5 | 19.0 | 26.0 | 20.0 | 32.0 | 18.5 | 29.0 | 18.0 | 24.0 | 19.2 | 26.0 | 20.3 | 32.5 |
| Rise in temp. (°C) | 1.5 | 7.0 | 2.3 | 10.5 | 2.0 | 9.0 | 3.0 | 15.5 | 2.5 | 12.0 | 2.0 | 8.0 | 2.7 | 9.0 | 3.8 | 16.5 |
| pH (at 15°C) | - | 9-10 | - | - | - | Ca. 6 | - | Ca. 6 | - | Ca. 6 | - | - | - | Ca. 5 | - | Ca. 6 |

Example 2

A 1,000 mℓ cylindrical aluminum container 20 having the same structure as shown in Figs. 3A and 3B was charged with 700 g of water and capped with a capping machine. A resilient covering 24 was attached to the bottom of the container 20 by means of a cellophane tape. A 300 mℓ cylindrical aluminum container 40 having the same structure as shown in Figs. 5A and 5B was charged with 105 g of anhydrous magnesium chloride in the form of particles having a particle size of 1.5 to 3 mm and capped with a capping machine. Thus, a two-component type melting agent was provided.

The water-containing container 20 was opened in an atmosphere of 15° C. When the temperature of the water was measured, it was 15° C. The anhydrous magnesium chloride-containing container 40 was opened and the whole amount of the anhydrous magnesium chloride was immediately added to the water in the container 20. The container 20 was closed with the resilient covering 24 and shaken for 60 seconds. When the temperature of the water was measured after shaking, it was 60° C.

The obtained hot water was poured in small portions onto ice of 150 g, whereby the whole amount of ice was melted.

Example 3

Melting compositions R through W having the formulations shown in Table 3 in accordance with the second invention were prepared. Each composition was agitated by means of a ball mill for 7 days to give a dispersion wherein the compound in the form of particles having a size of 30 to 90 µm was dispersed in toluene.

When each of the melting compositions R through W was applied onto the surface of ice by means of a spraying apparatus in an atmosphere of -1° C, the toluene was vaporized and the surface of the ice began to melt about 30 seconds after the spraying. In the case of using the melting compositions R, S and T, the ice was melted faster. With respect to the melting compositions R through W, the order of increasing ice melting rate after the vaporization of toluene was corresponding to the order of increasing temperature rise of water with respect to the effective ingredients as shown in Fig. 1.

Table 3

| | Melting composition No. | | | | | |
|---|---|---|---|---|---|---|
| | R | S | T | U | V | W |
| Toluene | 47.0 | 47.0 | 47.0 | 47.0 | 47.0 | 47.0 |
| $CaCl_2$ | 53.0 | - | 26.5 | - | - | - |
| $MgCl_2$ | - | 53.0 | 26.5 | - | - | - |
| $SrCl_2$ | - | - | - | 53.0 | - | - |
| LiCl | - | - | - | - | 53.0 | - |
| LiBr | - | - | - | - | - | 53.0 |
| Total | 100.0 | 100.0 | 100.0 | 100.0 | 100.0 | 100.0 |

* Figures in Table 3 mean the amount of the components in terms of gram.

Example 4

A 420 mℓ aerosol container was charged with 152 g of each of the melting compositions R through W. After the container was fitted with an aerosol valve and closed, 152 g of a liquefied petroleum gas as a propellant was introduced into the container through the valve. Then the container was fitted with a nozzle button to give an aerosol product. Thus, aerosol products R', S', T', U', V' and W' corresponding to the melting compositions R, S, T, U, V and W were prepared.

When each of the contents of the aerosol products R', S', T', U', V' and W' was sprayed onto the surface of ice in an atmosphere of -1 °C, the liquefied petroleum gas was vaporized before the composition reached to the ice surface. The surface of ice began to melt about 15 seconds after the spraying in a state that a small portion of toluene remained.

With respect to the aerosol products R', S', T', U', V' and W', the order of increasing ice melting rate after the vaporization of toluene was corresponding to the order of increasing temperature rise of water with respect to the effective ingredient as shown in Fig. 1.

In addition to the ingredients and elements used in the Examples, other ingredients and elements can be used in the Examples as set forth in the specification to obtain substantially the same results.

## Claims

1. A method for melting an aqueous solid comprising the steps of:
   dissolving as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide into water, and
   immediately thereafter, applying the resulting solution to an aqueous solid.

2. The method of Claim 1, wherein said solution has a temperature not lower than 0.l °C.

3. The method of Claim 1, wherein said effective ingredient is used in an amount of 0.03 to 150 parts by weight per 100 parts by weight of water.

4. The method of Claim 1, wherein said effective ingredient is added to water in such an amount that said solution has a temperature by at least 0.1 °C higher than that of the water used.

5. The method of Claim 1, wherein said effective ingredient is at least one compound selected from the group consisting of anhydrous calcium chloride, anhydrous magnesium chloride and anhydrous lithium chloride.

6. A composition for melting an aqueous solid comprising (A) at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide as an effective ingredient, and (B) water, said components (A) and (B) being contained in separate closed containers, respectively, or in a container so that the components (A) and (B) are separated from each other.

7. The composition of Claim 6, wherein the amount of said component (A) is from 0.03 to 150 parts by weight per 100 parts by weight of said component (B).

8. The composition of Claim 6, wherein said component (B) contains an antifreezing agent.

9. The composition of Claim 6, wherein said component (A) is at least one compound selected from the group consisting ahydrous calcium chloride, anhydrous magnesium chloride and anhydrous lithium chloride.

10. A composition for melting an aqueous solid comprising as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide, dissolved in water, wherein said composition retains substantially the heat generated on the dissolution and has a temperature not lower than 0.1 °C.

**11.** The composition of Claim 10, wherein the amount of said effective ingredient is from 0.03 to 150 parts by weight per 100 parts by weight of water.

**12.** The composition of Claim 10, wherein said composition has a temperature by at least 0.1 °C higher than that of the water used.

**13.** The composition of Claim 10, wherein said effective ingredient is at least one compound selected from the group consisting of anhydrous calcium chloride, anhydrous magnesium chloride and anhydrous lithium chloride.

**14.** A composition for melting an aqueous solid comprising as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide, dispersed in the form of particles having a size of 0.1 to 500 μm in a volatile organic solvent.

**15.** The composition of Claim 14, wherein said effective ingredient is at least one compound selected from the group consisting of anhydrous calcium chloride, anhydrous magnesium chloride an anhydrous lithium chloride.

**16.** An aerosol composition for melting an aqueous solid comprising (A) a dispersion comprising as an effective ingredient at least one compound selected from the group consisting of anhydrous calcium chloride, calcium chloride monohydrate, calcium chloride dihydrate, calcium bromide dihydrate, anhydrous magnesium chloride, anhydrous strontium chloride, anhydrous lithium chloride, lithium chloride monohydrate and anhydrous lithium bromide, dispersed in the form of particles having a size of 0.1 to 500 μm in a volatile organic solvent, and (B) a propellant.

**17.** The composition of Claim 16, wherein said effective ingredient is at least one compound selected from the group consisting of anhydrous calcium chloride, anhydrous magnesium chloride and anhydrous lithium chloride.

FIG. 1

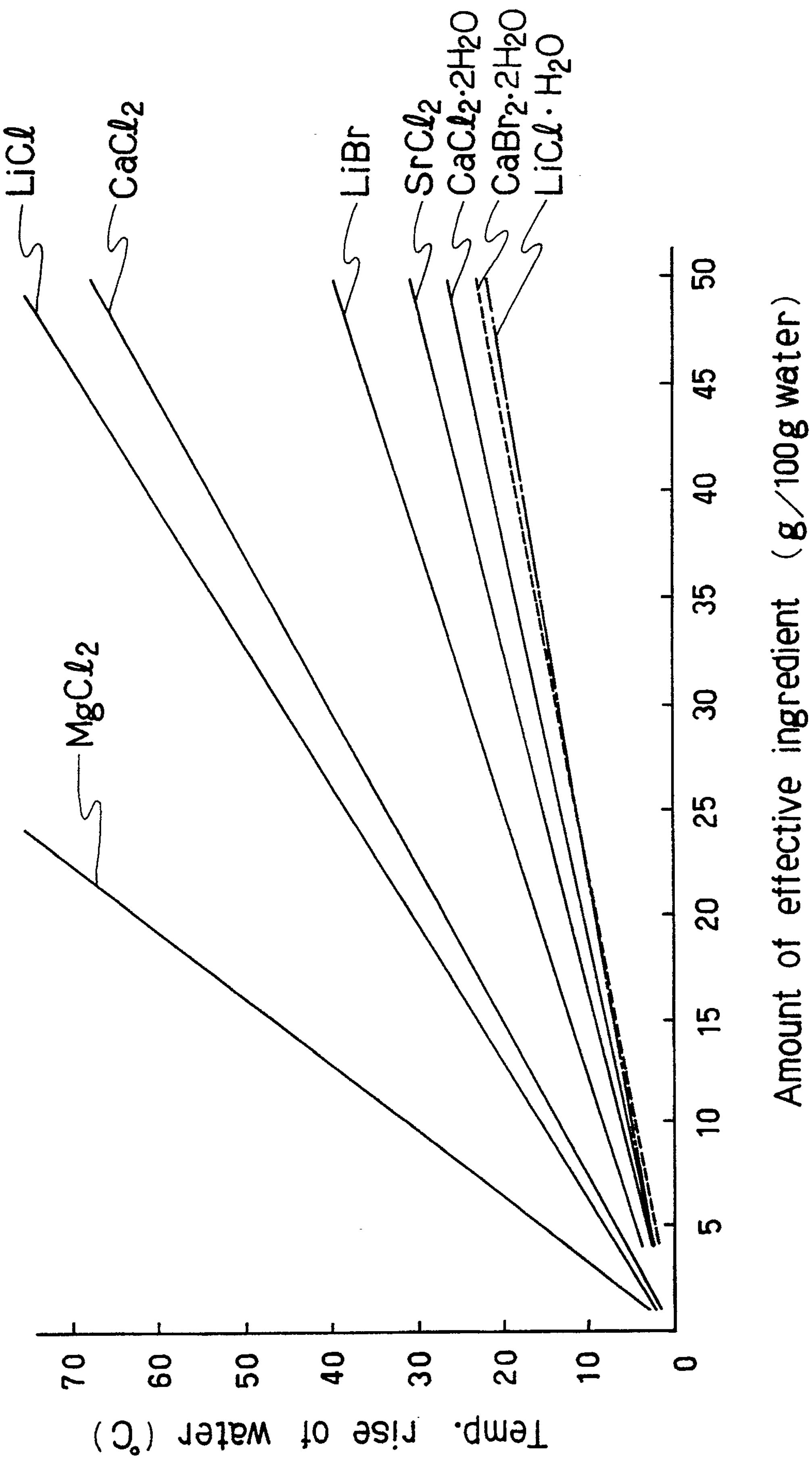

$MgCl_2$
LiCl
$CaCl_2$
LiBr
$SrCl_2$
$CaCl_2 \cdot 2H_2O$
$CaBr_2 \cdot 2H_2O$
$LiCl \cdot H_2O$
Temp. rise of water (°C)
0
10
20
30
40
50
60
70
5
10
15
20
25
30
35
40
45
50
Amount of effective ingredient (g/100g water)

FIG. 2A

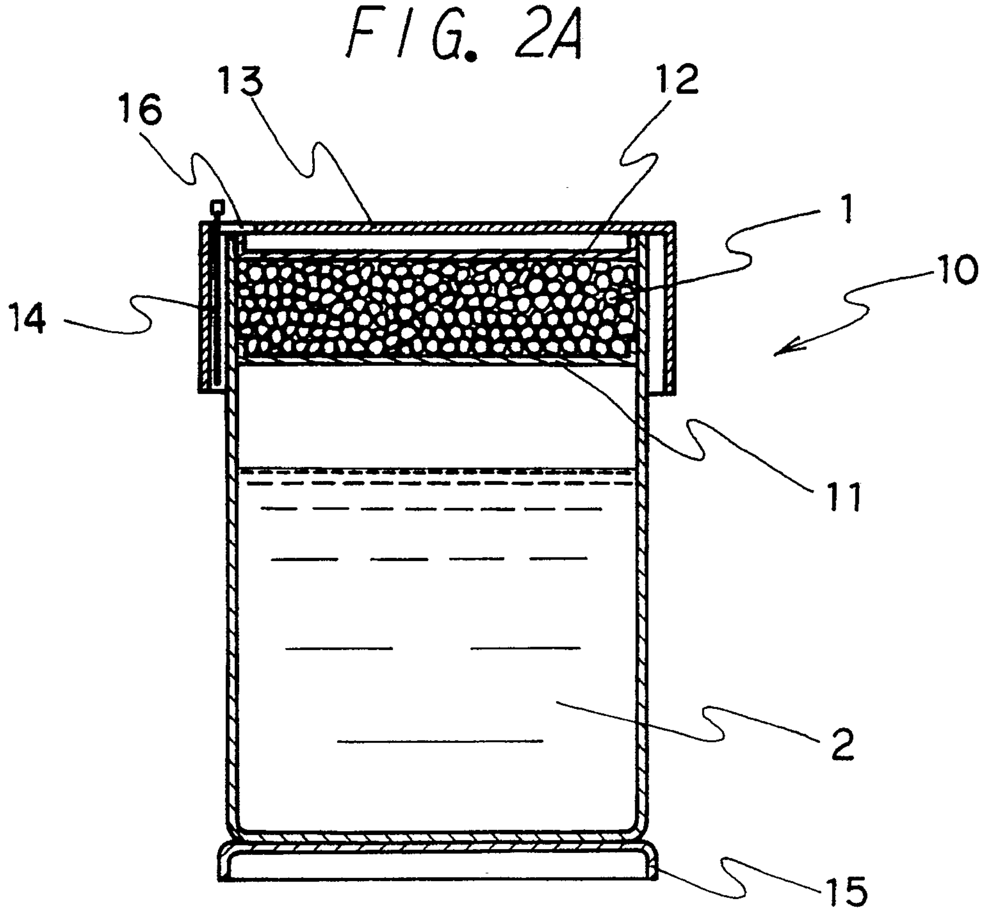


FIG. 2B

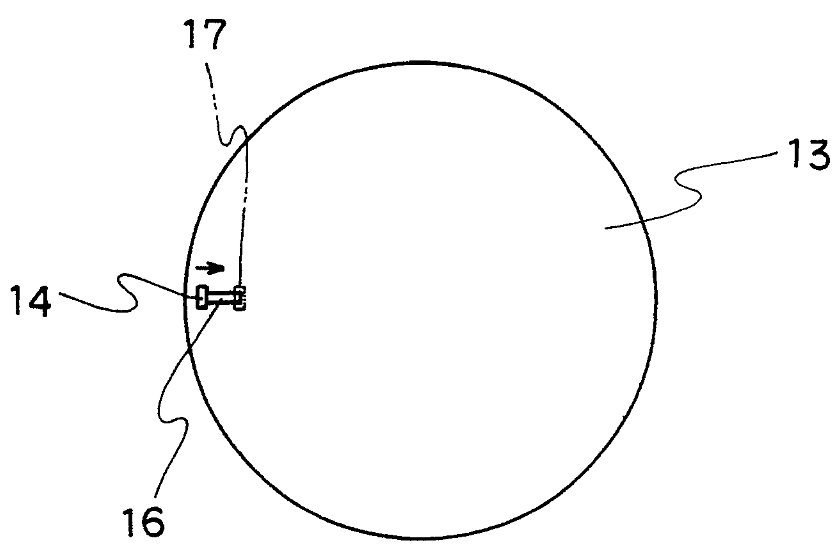

FIG. 3A

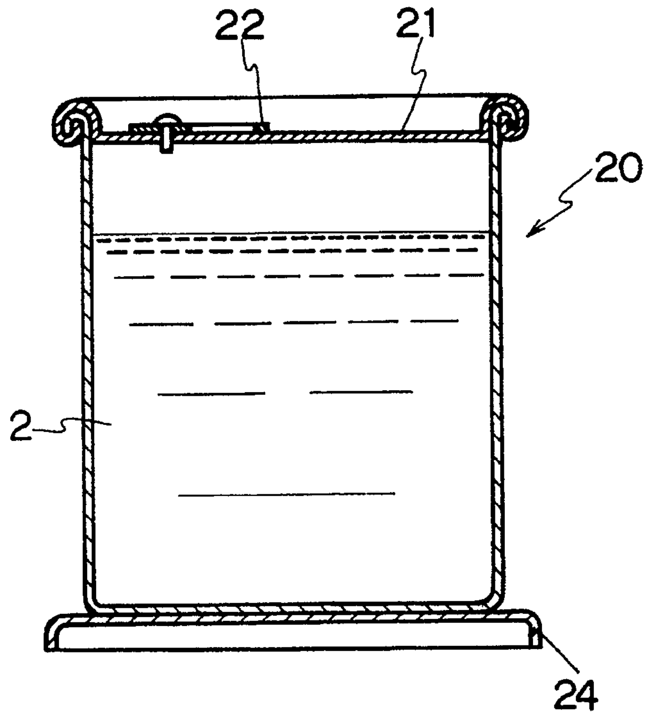


FIG. 3B

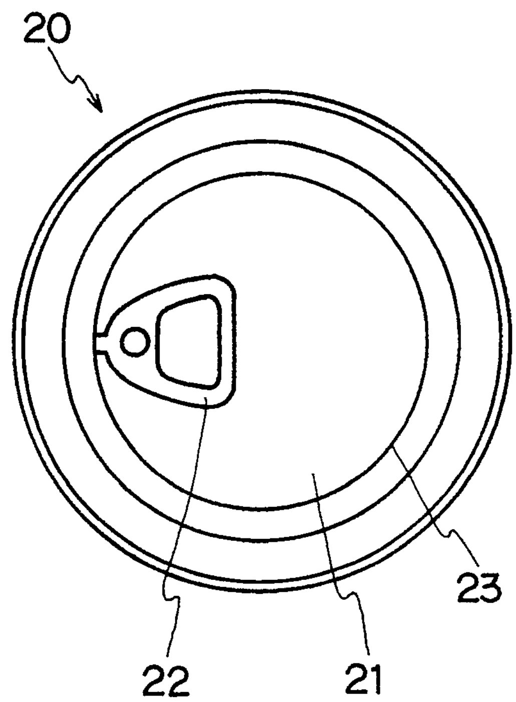


FIG. 4

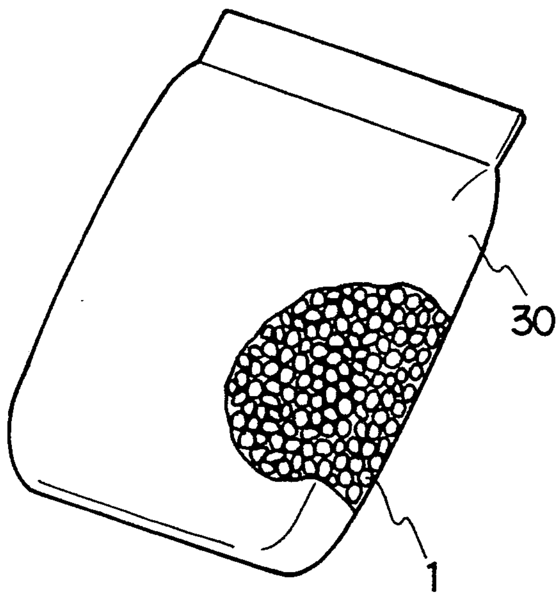

FIG. 5A

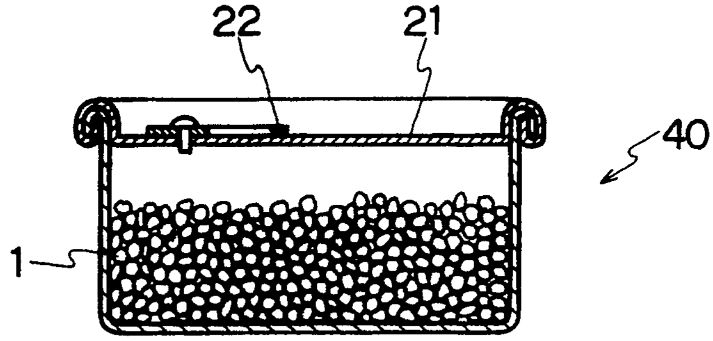


FIG. 5B

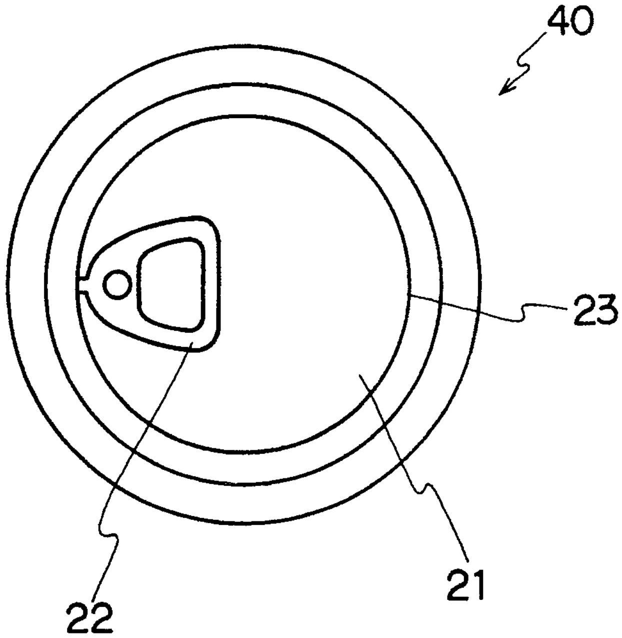

European Patent Office

# EUROPEAN SEARCH REPORT

Application Number

**EP 90 11 9498**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 731 353 (J.M. FAIN et al.)<br>* Column 1, lines 37-50; column 2, lines 1-9; claims 1-6 *<br>- - - | 1,2,3,8,10 | C 09 K 3/18 |
| Y | JAPANESE PATENT OFFICE, FILE SUPPLIER JAPS, Tokyo, JP;<br>& JP-A-63 097 683 (CHUO RIKEN K.K.)<br>* Whole abstract *<br>- - - | 1,5,6-8 | |
| Y | JAPANESE PATENT OFFICE, FILE SUPPLIER JAPS, Tokyo, JP;<br>& JP-A-62 089 785 (MASANOBU MAKISE)<br>* Whole abstract *<br>- - - | 1,5,6-8 | |
| A | EP-A-0 180 568 (MASANOBU MAKISE)<br>* Page 3, lines 8-23; table 1; claims *<br>- - - | 1 | |
| A | FR-A-2 214 089 (TEXACO DEVELOP. CORP.)<br>* Page 1, lines 20-34; claims *<br>- - - - - | 1 | |

TECHNICAL FIELDS SEARCHED (Int. Cl.5)

C 09 K

The present search report has been drawn up for all claims

| Place of search | Date of completion of search | Examiner |
|---|---|---|
| The Hague | 10 February 91 | LEDER M. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document